# EUROPEAN PATENT APPLICATION

(11) **EP 4 120 460 A1**
(43) Date of publication of application: **18.01.2023**
(21) Application number: 22184785.8
(22) Date of filing: 13.07.2022
(51) Int. Cl.: H01M 50/443, H01M 50/489, H01M 10/0525, H01M 50/417, H01M 50/446, H01M 50/449, H01M 50/454, H01M 50/46, H01M 10/0587

(54) **SEPARATOR, LITHIUM-ION CELL, AND ELECTRIC APPARATUS**

(30) Priority: 13.07.2021 CN 202110791347
(71) Applicant: Ningde Amperex Technology Limited, Ningde, Fujian 352100 (CN)
(72) Inventor: SONG, Chuantao, Ningde City, Fujian Province, 352100 (CN)
(74) Representative: Icosa

(57) **Abstract**

A separator, a lithium-ion cell including the separator, and an electric apparatus including the lithium-ion cell. The separator includes a separator substrate and a coating layer disposed on the separator substrate, and the separator is adhered to an adjacent first electrode plate or second electrode plate through the coating layer. The coating layer is configured to decrease a peel force between the separator and an external component when a temperature is higher than a preset threshold or to be capable of chemically reacting with an acidic substance. When the temperature is higher than a threshold, the peel force between the separator and an adjacent electrode plate is decreased. To be specific, such lithium-ion cell can improve a current situation that the peel force between the separator and the electrode plate remains relatively great when the temperature of the cell is higher than a threshold.

## Description

### BACKGROUND

### TECHNICAL FIELD

Embodiments of this application relate to the field of battery technologies, and in particular, to a separator, a lithium-ion cell, and an electric apparatus.

### BACKGROUND ART

A lithium-ion cell is an apparatus that converts external energy into electric energy and stores the electric energy in the lithium-ion cell to supply power to an external electric apparatus (for example, a portable electronic device) as needed. At present, lithium-ion cells are widely used in electronic products such as mobile phones, tablets, and notebook computers.

Generally, a lithium-ion cell includes a housing, an electrode assembly accommodated in the housing, and a tab connected to the electrode assembly and partially extending out of the housing. The electrode assembly includes a first electrode plate, a second electrode plate, and a separator. The separator is disposed between the adjacent first electrode plate and second electrode plate, and is adhered to the adjacent first electrode plate and second electrode plate by bonding, so that the first electrode plate, the second electrode plate, and the separator are fixed.

When an abnormal accident such as a short circuit or overcharge occurs in the lithium-ion cell, the lithium-ion cell suffers from thermal runaway, with a high-temperature gas generated inside the housing. The high-temperature gas causes the housing to expand in thickness direction of the housing, adaptively shrink in length direction and width direction of the housing, and further squeeze the electrode assembly. In addition, a temperature of the electrode assembly increases continuously, and an electrolyte produces an acidic substance due to the high temperature. When the lithium-ion cell is at a high temperature, the separator and the electrode plate (the first electrode plate or the second electrode plate) cannot be separated in a timely manner, which makes the temperature of the lithium-ion cell continue to rise, and accumulated heat inside the cell is difficult to dissipate in a timely manner, which may further lead to safety accidents such as explosions.

### SUMMARY

Embodiments of this application are intended to provide a separator, a lithium-ion cell, and an electric apparatus. The separator can decrease a peel force between the separator and an electrode plate when a temperature of a lithium-ion cell is higher than a threshold, which helps separate the separator from the electrode plate so as to increase a heat dissipation area inside the cell, thereby improving stability of the cell.

The following technical solutions are adopted for the embodiments of this application to resolve the technical issue.

A lithium-ion cell includes an electrode assembly. The electrode assembly includes a first electrode plate, a second electrode plate, and a separator, where the separator is disposed between the first electrode plate and the second electrode plate. The separator includes a separator substrate and a coating layer disposed on the separator substrate, and the separator is adhered to the adjacent first electrode plate or second electrode plate through the coating layer. The coating layer is configured to decrease a peel force between the separator and an external component when a temperature is higher than a preset threshold, or the coating layer is configured to be capable of chemically reacting with an acidic substance. In some embodiments, the preset threshold may be 100°C; in other embodiments, the preset threshold may be 130°C; and in still other embodiments, the preset threshold may be 150°C.

When the temperature of the lithium-ion cell provided in the embodiments of this application is higher than the preset threshold, the peel force between the separator and the adjacent first electrode plate or second electrode plate is decreased, which helps open a bonding interface between the separator and the electrode plate to increase a contact area between the electrode assembly and an electrolyte, thereby increasing a heat dissipation area inside the lithium-ion cell and improving stability of the lithium-ion cell.

In a further improvement scheme of the foregoing technical solution, the lithium-ion cell further includes an electrolyte. The electrolyte is configured to produce the acidic substance when the temperature is higher than the set threshold.

In a further improvement scheme of the foregoing technical solution, the coating layer includes micromatrix particles and a binder. The micromatrix particles are configured to be capable of chemically reacting with an acidic substance. a binder, used for bonding the micromatrix particles to the separator substrate.

In a further improvement scheme of the foregoing technical solution, the micromatrix particles include an alkaline substance.

In a further improvement scheme of the foregoing technical solution, the micromatrix particles include a carbonate, and the carbonate includes at least one selected form the group consisting of lithium carbonate, sodium carbonate, sodium bicarbonate, calcium carbonate, and magnesium carbonate.

In a further improvement scheme of the foregoing technical solution, the coating layer includes micromatrix particles and a binder. The micromatrix particles are configured to soften or melt when the temperature is higher than the preset threshold. The binder is used for bonding the micromatrix particles to the separator substrate.

In a further improvement scheme of the foregoing technical solution, the micromatrix particles include at least one selected form the group consisting of polyethylene, polypropylene, ethylene propylene rubber, ethylene propylene random polymer, 1-butene-1-propylene polymer, ethylene butene propylene copolymer, and block copolymer polypropylene.

In a further improvement scheme of the foregoing technical solution, the micromatrix particles are spherical, ellipsoidal, sheet-shaped, cuboidal, or pyramidal.

In a further improvement scheme of the foregoing technical solution, a maximum length of the micromatrix particles is less than 5 µm.

In a further improvement scheme of the foregoing technical solution, the binder is in a form of particles, and a ratio of a maximum particle diameter of the binder to a maximum diameter of the micromatrix particles ranges from 0.1 to 0.5.

In a further improvement scheme of the foregoing technical solution, a surface area of the micromatrix particles coated with the binder accounts for 10%-90% of a surface area of the micromatrix particles.

In a further improvement scheme of the foregoing technical solution, the coating layer further includes a dispersing agent. A percentage of the micromatrix particles in the coating layer by mass is higher than 90%; a percentage of the binder in the coating layer by mass is lower than 10%; and a percentage of the dispersing agent in the coating layer by mass is lower than 2%.

Another embodiment of this application further provides a separator. The separator includes a separator substrate and a coating layer disposed on the separator substrate, and the separator is adhered to an adjacent first electrode plate or second electrode plate by bonding through the coating layer. The coating layer is configured to decrease in strength when the temperature is higher than a preset threshold, or the coating layer is configured to be capable of chemically reacting with an acidic substance.

In a further improvement scheme of the foregoing technical solution, the lithium-ion cell further includes an electrolyte. The electrolyte is configured to produce the acidic substance when the temperature is higher than the set threshold.

In a further improvement scheme of the foregoing technical solution, the coating layer includes micromatrix particles and a binder. The micromatrix particles are configured to be capable of chemically reacting with an acidic substance. The binder is used for bonding the micromatrix particles to the separator substrate.

In a further improvement scheme of the foregoing technical solution, the micromatrix particles include an alkaline substance.

In a further improvement scheme of the foregoing technical solution, the micromatrix particles include a carbonate, and the carbonate includes at least one selected form the group consisting of lithium carbonate, sodium carbonate, sodium bicarbonate, calcium carbonate, and magnesium carbonate.

In a further improvement scheme of the foregoing technical solution, the coating layer includes micromatrix particles and a binder. The micromatrix particles are configured to soften or melt when the temperature is higher than the preset threshold. The binder is used for bonding the micromatrix particles to the separator substrate.

In a further improvement scheme of the foregoing technical solution, the micromatrix particles include at least one selected form the group consisting of polyethylene, polypropylene, ethylene propylene rubber, ethylene propylene random polymer, 1-butene-1-propylene polymer, ethylene butene propylene copolymer, and block copolymer polypropylene.

In a further improvement scheme of the foregoing technical solution, the micromatrix particles are spherical, ellipsoidal, sheet-shaped, cuboidal, or pyramidal.

In a further improvement scheme of the foregoing technical solution, a maximum length of the micromatrix particles is less than 5 µm.

In a further improvement scheme of the foregoing technical solution, the binder is in a form of particles, and a ratio of a maximum particle diameter of the binder to a maximum diameter of the micromatrix particles ranges from 0.1 to 0.5.

In a further improvement scheme of the foregoing technical solution, a surface area of the micromatrix particles coated with the binder accounts for 10%-90% of a surface area of the micromatrix particles.

In a further improvement scheme of the foregoing technical solution, the coating layer further includes a dispersing agent. A percentage of the micromatrix particles in the coating layer by mass is higher than 90%; a percentage of the binder in the coating layer by mass is lower than 10%; and a percentage of the dispersing agent in the coating layer by mass is lower than 2%.

Another embodiment of this application further provides an electric apparatus, including the lithium-ion cell described in any one of the foregoing embodiments.

### BRIEF DESCRIPTION OF DRAWINGS

One or more embodiments are used as examples for description by using corresponding accompanying drawings. These example descriptions impose no limitation on the embodiments. Elements with a same reference sign in the accompanying drawings represent similar elements. Unless otherwise stated, the figures in the accompanying drawings impose no limitation on a scale.
FIG. 1 is a stereoscopic schematic diagram of a lithium-ion cell according to an embodiment of this application;
FIG. 2 is a schematic cross-sectional diagram of the lithium ion-cell in FIG. 1 along line A-A with a housing hidden;
FIG. 3 is a partial schematic structural diagram of an electrode assembly in FIG. 2;
FIG. 4 is a partial schematic diagram of a coating layer in FIG. 3;
FIG. 5 is a schematic diagram of the coating layer in FIG. 3 that has been partially corroded;
FIG. 6 is a graph of interface peel force, that changes with temperature, between a separator and an adjacent electrode plate that are separately in the lithium-ion cell in FIG. 1 and in a conventional lithium-ion cell;
FIG. 7 is a partial schematic structural diagram of an electrode assembly in a lithium-ion cell according to another embodiment of this application;
FIG. 8 is a partial schematic diagram of a coating layer in FIG. 7; and
FIG. 9 is a schematic diagram of an electric apparatus according to an embodiment of this application.

In the drawings:
1: lithium-ion cell;
100: housing;
200: electrode assembly; 210: first electrode plate; 220: second electrode plate; 230: separator; 231: separator substrate; 232: coating layer; 2321: micromatrix particles; 2322: binder;
1b: lithium-ion cell;
200b: electrode assembly; 210b: first electrode plate; 220b: second electrode plate; 230b: separator; 231b: separator substrate; 232b: coating layer; 2321b: micromatrix particles; 2322b: binder; and
2. electric apparatus.

### DETAILED DESCRIPTION

For ease of understanding this application, the following further describes this application in detail with reference to the accompanying drawings and specific embodiments. It should be noted that when a component is referred to as being "fixed to", "adhered to", or "mounted to" another component, it may be directly fixed to the another component, or there may be one or more components therebetween. When a component is deemed as being "connected to" another component, it may be directly connected to the another component, or there may be one or more components in between. The terms "vertical", "horizontal", "left", "right", "inside", "outside", and similar expressions used in this specification are merely for description purposes.

Unless otherwise defined, all technical and scientific terms used herein shall have the same meanings as commonly understood by those skilled in the art to which this application belongs. The terms used in the specification of this application are merely intended to describe specific embodiments but not to constitute any limitations on this application. The term "and/or" used herein includes any and all combinations of one or more associated items that are listed.

In addition, technical features involved in different embodiments of this application that are described below may be combined as long as they do not conflict with each other.

In this specification, "installing" includes fixing or limiting an element or apparatus to a specific location or place by means of welding, screwing, clamping, bonding, or the like. The element or apparatus may stay still at the specific position or place, or may move within a limited range. After being fixed or limited to the specific position or place, the element or apparatus can be disassembled or cannot be disassembled. This is not limited in the embodiments of this application.

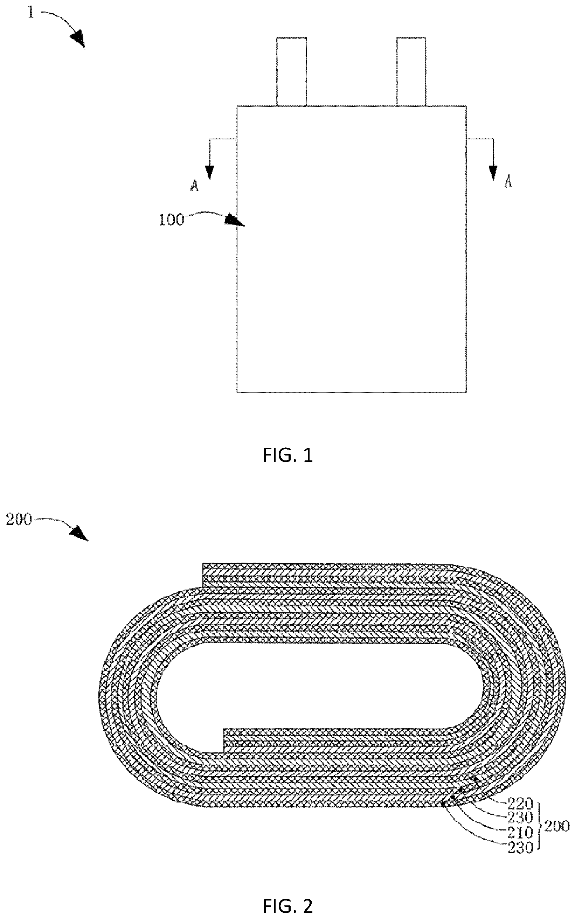

FIG. 1 to FIG. 3 are a schematic diagram of a lithium-ion cell 1 according to an embodiment of this application, a schematic cross-sectional diagram of the lithium-ion cell 1 along line A-A with a housing hidden, and a partial schematic structural diagram of an electrode assembly 200, respectively. The lithium-ion cell 1 includes a housing 100, an electrode assembly 200, and an electrolyte (not shown in the figures). The electrode assembly 200 and the electrolyte are both accommodated in the housing 100. Specific structures of the housing 100 and the electrode assembly 200 will be described in sequence below.

For the housing 100, specifically refer to FIG. 1. The housing 100 has a flat rectangular shape as a whole, and is provided with an accommodating cavity (not shown in the figure) inside, and the accommodating cavity is used to accommodate the electrode assembly 200 and the electrolyte. In this embodiment, the lithium-ion cell 1 is a pouch cell, and the housing 100 is an aluminum-plastic film. It can be understood that, in other embodiments of this application, the lithium-ion cell 1 may alternatively be a hard shell cell, and correspondingly, the housing 100 is a metal shell.

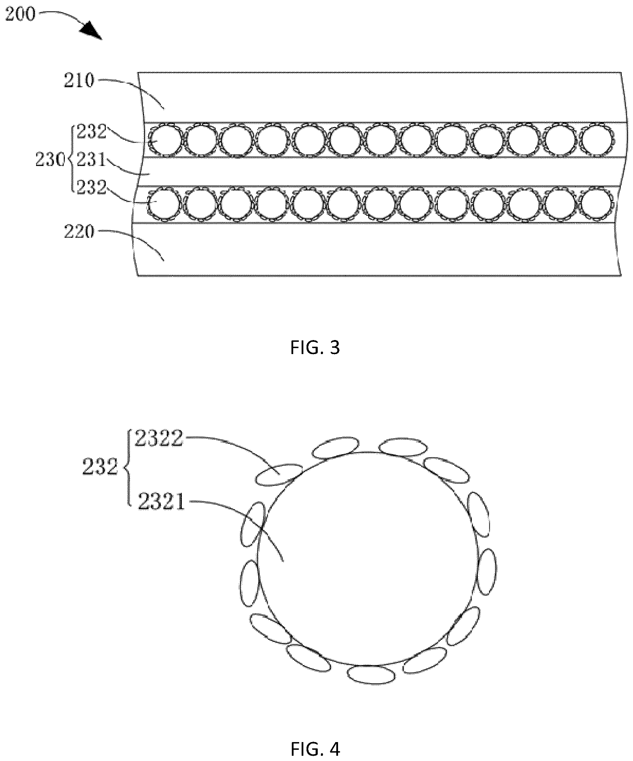

For the electrode assembly 200, specifically refer to FIG. 2 and FIG. 3. The electrode assembly 200 includes a first electrode plate 210, a second electrode plate 220, and a separator 230. The first electrode plate 210 and the second electrode plate 220 have opposite polarities and are spaced apart from each other; and one of the two electrode plates is an anode plate and the other is a cathode plate. The separator 230 is disposed between the first electrode plate 210 and the second electrode plate 220 for separating the two. In this embodiment, the electrode assembly 200 is of a wound structure. Specifically, the first electrode plate 210, a separator 230, the second electrode plate 220, and another separator 230 are stacked and wound to form a columnar structure with an oval cross section, so as to be accommodated in the accommodating cavity. It can be understood that, in other embodiments of this application, the electrode assembly 200 may alternatively be of a laminated structure, which is not limited herein.

The electrolyte is accommodated in the housing 100, and the electrode assembly 200 is soaked in the electrolyte. The electrolyte is used to provide an environment for lithium ion conduction, so that lithium ions can be intercalated into the first electrode plate 210 or the second electrode plate 220 in due time so as to realize a charging and discharging process of the lithium-ion cell 1. When a temperature of the cell is higher than a set threshold, the electrolyte produces an acidic substance, which leads to presence of hydrogen ions in the electrolyte. The "set threshold" mentioned in this application document refers to a value of a temperature at which the electrolyte produces an acidic substance just when the temperature of the lithium-ion cell rises to the value. In other words, when the temperature is higher than the set threshold, the acidic substance has already been produced in the electrolyte. The set threshold is a temperature at which the lithium-ion cell is already in an abnormal working state, which varies with specific specifications and usage scenarios of the cell. For example, in some embodiments, the preset threshold may be 100°C; in other embodiments, the preset threshold may be 130°C; and in still other embodiments, the preset threshold may be 150°C.

The first electrode plate 210 and the second electrode plate 220 are conventional structures in the prior art, and will not be described in detail herein. The structure of the separator 230 will be described in detail below. Specifically referring to FIG. 3, and with reference to FIG. 2, the separator 230 includes a separator substrate 231 and a coating layer 232 disposed on a surface of the separator substrate 231. The separator 230 is adhered to the adjacent first electrode plate 210 or second electrode plate 220 by bonding through the coating layer 232.

The separator substrate 231 is a flexible strip-like structure, which is a carrier on which the coating layer 232 is applied. In this embodiment, the separator substrate 231 includes organic fiber and an adhesive, and the adhesive is used to bond the organic fibers to form the separator substrate 231 with micropores. Optionally, the organic fiber includes one or a mixture of two or more of polypropylene, glass fiber, carbon fiber, boron fiber, and polyamide. It can be understood that, in other embodiments of this application, the organic fiber may alternatively be selected from other suitable materials. Optionally, the adhesive includes acrylic glue; and certainly, in other embodiments of this application, the adhesive may alternatively include other types of glue. The separator substrate 231 has a main surface defined by its length and width, with two main surfaces disposed back away each other: one main surface faces toward the first electrode plate 210, and the other main surface faces toward the second electrode plate 220.

The coating layer 232 is applied to the main surface of the separator substrate 231, and is configured to be capable of chemically reacting with the acidic substance. In this way, when the temperature of the lithium-ion cell 1 is higher than the set threshold, the coating layer 232 is consumed by chemical reaction with the acidic substance produced by the electrolyte, and its own strength decreases, so that bonding strength between the coating layer 232 and an electrode plate (that is, the first electrode plate 210 or the second electrode plate 220) outside the separator 230 decreases accordingly. In this embodiment, the main surface on the side of the separator substrate 231 facing toward the first electrode plate 210 and the main surface on the side of the separator substrate 231 facing toward the second electrode plate 220 each are provided with the coating layer 232, and the separator 230 is adhered to the adjacent first electrode plate 210 and second electrode plate 220 by bonding through the coating layer 232. It can be understood that, in other embodiments of this application, the separator 230 may alternatively be provided with the coating layer 232 on only one side of the separator substrate 231 facing toward the first electrode plate 210 or second electrode plate 220.

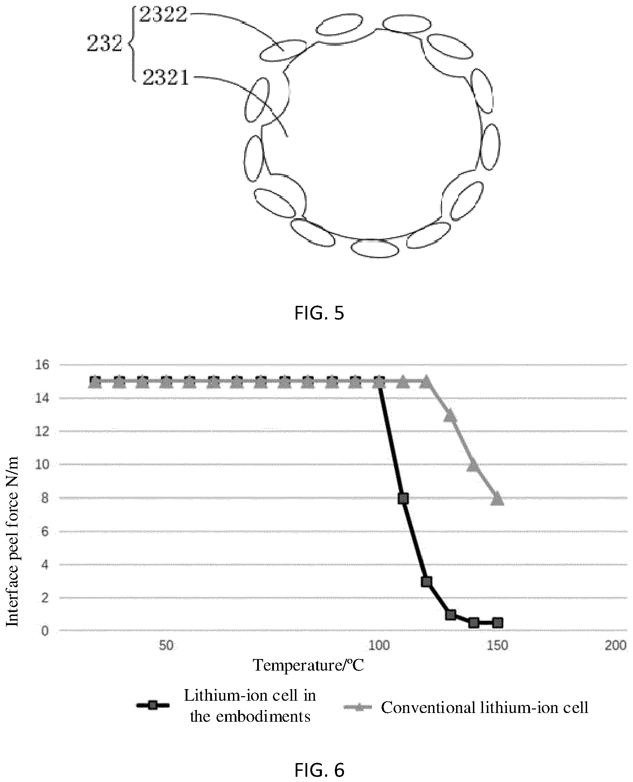

Specifically, FIG. 4 and FIG. 5 are a partial schematic diagram of the coating layer 232 and a schematic diagram of the coating layer 232 that has been partially corroded, respectively. In addition, with reference to FIG. 1 to FIG. 3, the coating layer 232 includes micromatrix particles 2321 and binder 2322. In this embodiment, the micromatrix particles 2321 are in a form of tiny particles and laid on the surface of the separator substrate 231. The micromatrix particles 2321 are configured to be capable of chemically reacting with the foregoing acidic substance, so that the lithium-ion cell is corroded by the acidic substance when the temperature of the lithium-ion cell is higher than the set threshold, which decreases strength of the lithium-ion cell. Optionally, the micromatrix particles 2321 include an alkaline substance. Further optionally, the micromatrix particles 2321 include a carbonate. In this embodiment, the micromatrix particles 2321 include lithium carbonate.

When the temperature T of the lithium-ion cell 1 goes out of control and rises above the set threshold, the lithium-ion cell 1 expands in its thickness direction, adaptively shrinks in its length direction and width direction at the same time, and generate a squeezing force in a shear direction on the first electrode plate 210, the second electrode plate 220, and the separator 230 that are stacked; and the squeezing force makes an interface separation force F be generated between the separator 230 and the adjacent electrode plate in a direction perpendicular to the separator 230. In addition, the electrolyte produces the acidic substance, and lithium carbonate reacts with the acidic substance to produce a lithium salt, carbon dioxide, and water. On one hand, this chemical reaction decreases the strength of the micromatrix particles 2321 due to corrosion on the surface, and as a contact area between the micromatrix particles 2321 and the binder 2322 is decreased, an interface peel force f between the separator 230 and the electrode plate (the first electrode plate 210 or the second electrode plate 220) is significantly decreased. On the other hand, carbon dioxide further expands the housing 100 in its thickness direction and further adaptively shrinks in its length direction and width direction, thereby further increasing the separation force F. The interface peel force f and the interface separation force F go against each other, making separation of the separator 230 from the adjacent electrode plate easier. When the interface peel force f drops to be less than the separation force F, the separator 230 will be separated from the adjacent electrode plate, and the contact area between the electrode assembly 200 and the electrolyte increases, which facilitates the electrode assembly to dissipate heat to the outside of the lithium-ion cell 1 through the electrolyte and the housing 100. It can be understood that, although the micromatrix particles 2321 in this embodiment include the foregoing lithium carbonate, this application is not limited thereto. In other embodiments of this application, the micromatrix particles 2321 may also include other carbonates such as sodium carbonate, sodium bicarbonate, calcium carbonate, or magnesium carbonate, or include at least two of these materials. In addition, the micromatrix particles 2321 may alternatively include strong alkaline substances such as lithium hydroxide and/or sodium hydroxide and/or potassium hydroxide. In some embodiments, the peel force f and the temperature T satisfy the following relationship: when 100°C≤T≤130°C, f=(62-0.47T)N/m.

Generally, a maximum length of the micromatrix particles 2321 is less than 5 micrometers (µm). To make overall thickness of the separator 230 thinner and ensure the energy density of the lithium-ion cell 1 as high as possible, the maximum length of the micromatrix particles 2321 is preferably less than 2 µm. Optionally, the micromatrix particles 2321 is spherical; and certainly, the micromatrix particles 2321 in this application are in various shapes actually. In other embodiments of this application, the micromatrix particles 2321 may also be ellipsoidal, sheet-shaped, cuboidal, pyramidal, or the like, which are not limited herein.

The binder 2322 is disposed on the surface of the micromatrix particles 2321 to bond the micromatrix particles 2321 to the separator substrate 231 so that the micromatrix particles 2321 and the binder 2322 together constitute the coating layer 232, and also to help the coating layer 232 be adhered to the adjacent electrode plate (that is, the first electrode plate or the second electrode plate) by bonding. Certainly, to prevent the micromatrix particles 2321 from being completely covered by the binder 2322, causing that the subsequent reaction of the micromatrix particles 2321 with the acidic substance cannot proceed normally, an area of the micromatrix particles 2321 covered by the binder 2322 accounts for 10%-90% of a surface area of the micromatrix particles 2321. In this embodiment, the binder 2322 is presented in a form of particles on a surface of the micromatrix particle 2321, and a plurality of particles of binder 2322 are attached to each surface of the micromatrix particles 2321; preferably, a ratio of the maximum particle diameter of the binder 2322 to the maximum diameter of the micromatrix particles 2321 ranges from 0.1 to 0.5 to ensure that the area of the micromatrix particles 2321 covered by the binder 2322 falls within the foregoing ratio range, and to prevent the micromatrix particles 2321 from being completely covered by two binder particles placed opposite to each other, as shown in the figure. Optionally, the binder 2322 includes one or more of epoxy resin, polyester, polyurethane, polyesterimide, and polyimide.

It should be noted that there are actually various ways to form the coating layer 232 on a surface of the separator substrate 231. For example, in some embodiments, a process of forming the coating layer 232 includes the following steps.

S11: Apply a primer binder to the surface of the separator substrate 231. Specifically, the binder may be disposed on the surface of the separator substrate 231 through coating or spraying to form the primer binder. Optionally, a thickness of the primer binder is approximately 0.5 µm so as to reduce the overall thickness of the coating layer 232 as much as possible while ensuring better bonding strength.

S12: Lay the micromatrix particles on the primer binder. Specifically, a layer of micromatrix particles can be sprayed on a surface of the primer binder by using a spraying device, and relatively uniform distribution of the micromatrix particles 2321 on the overall separator substrate 231 is ensured. The primer binder is used for bonding and fixing the micromatrix particles 2321 with the separator substrate 231. Because the size of the micromatrix particles 2321 has a great influence on the overall thickness of the coating layer 232, the maximum length of the micromatrix particles 2321 is preferably less than 2 µm, so that the thickness of the micromatrix particle 2321 layer is approximately 2 µm. Certainly, in other embodiments, multiple layers of micromatrix particles may alternatively be sprayed on the primer binder, which is not limited herein.

S13: Apply a top-layer binder to the micromatrix particles. Specifically, the binder may be disposed on the surface of the micromatrix particles 2321 through coating or spraying to form the top-layer binder. The top-layer binder is used for bonding and fixing the micromatrix particles 2321 with the adjacent electrode plate. Optionally, a thickness of the top-layer binder is approximately 0.5 µm so as to reduce the overall thickness of the coating layer 232 as much as possible while ensuring better bonding strength.

For another example, in some other embodiments of this application, a process of forming the coating layer 232 includes the following steps.

S21: Mix the micromatrix particles 2321 with the binder 2322 to form a coating slurry. Specifically, the micromatrix particles 2321 and the binder 2322 are mixed in a set ratio and stirred to form the coating slurry. Because the binder 2322 is fluid during mixing and adheres to the surfaces of the micromatrix particles 2321 during mixing, an amount of the binder 2322 can be relatively small. In this embodiment, a percentage of the micromatrix particles 2321 in the entire coating layer 232 by mass is higher than 90%, and a percentage of the binder 2322 in the entire coating layer 232 by mass is lower than 10%. In this way, a sufficient percentage of the binder 2322 can be ensured, and it can be avoided that the surfaces of micromatrix particles 2321 are completely covered by the binder 2322, resulting in interference with subsequent reactions of the micromatrix particles 2321 with the acidic substance in the electrolyte.

S22: Apply the coating slurry to the surface of the separator substrate 231.

Further, to make the micromatrix particles 2321 distribute more uniformly during stirring and reduce local agglomeration, the coating layer 232 further includes a dispersing agent. The dispersing agent is used for making the micromatrix particles 2321 distribute in the binder 2322 more uniformly. Optionally, the dispersing agent includes at least one selected form the group consisting of polyoxyethylene ether, sodium carboxymethyl cellulose, and gelatin. In this case, the forming process includes the following steps.

S21': Mix the micromatrix particles 2321, the binder 2322, and the dispersing agent to form a coating slurry. Specifically, the micromatrix particles 2321, the binder 2322, and the dispersing agent are mixed in a set ratio and stirred to form the coating slurry. In this embodiment, a percentage of the micromatrix particles 2321 in the entire coating layer 232 by mass is higher than 90%; a percentage of the binder 2322 in the entire coating layer 232 by mass is lower than 10%; and a percentage of the dispersing agent in the entire coating layer 232 by mass is lower than 2%. In this way, sufficient percentages of the binder 2322 and the dispersing agent can be ensured, and it can be avoided that the surfaces of micromatrix particles 2321 are completely covered by the binder 2322, resulting in interference with subsequent reactions of the micromatrix particles 2321 with the acidic substance in the electrolyte.

S22: Apply the coating slurry to the surface of the separator substrate 231.

FIG. 6 is a graph of interface peel force, that changes with temperature, between a separator and an adjacent electrode plate that are separately in the lithium-ion cell 1 with the coating layer 232 and in a conventional lithium-ion cell. The coating layer 232 of the separator 230 in the lithium-ion cell 1 is made by using the foregoing steps S11 to S13. A coating layer of the separator in the conventional lithium-ion cell for comparison is made by sequentially applying the binder, ceramic particles, and the binder on the separator substrate.

Next, with the test steps for the lithium-ion cell 1 with the coating layer 232 as an example, a test method for the interface peel force between the separator and the adjacent electrode plate is described. The test method is as follows.

S31: Use a separator with the coating layer 232 to make a finished lithium-ion cell.

S32: Fully discharge the finished cell.

S33: Disassemble the cell; cut an unfolded electrode plate and its adjacent separator into to-be-stretched samples with a width of 20 mm and a length of 10 cm, where the to-be-stretched sample includes three layers: a positive electrode plate, a separator, and a negative electrode plate; and put the sample in a fume cupboard to dry for 12 h.

S34: Pre-stretch the to-be-stretched sample to peel off the electrode plate (the positive electrode plate or the negative electrode plate) from the separator 230 to form a 180° peel test direction.

S35: Set temperatures in a high temperature box of a GOTECH tensile machine to target temperatures, wait the temperatures in the high temperature box to reach the target temperatures ± 2°C, and keep such the temperatures steady for 5 min.

S36: Immerse the to-be-stretched sample in a container containing an electrolyte, and place the container in the high temperature box.

S37: When temperatures of the container reach the target temperatures ±2°C and are steady for 5 min, take out the sample and start to stretch the electrode plate.

The target temperatures are 20°C, 30°C, 40°C, ..., and 150°C in sequence. Test steps of lithium-ion cells in the prior art are basically the same, and details are not described herein.

With reference to FIG. 6, when the test temperature is lower than 100°C, the interface peel force f between the separator 230 and the electrode plate in the lithium-ion cell 1 in this embodiment of this application is 15 N/m; after the test temperature is higher than 100°C, the coating layer 232 begins to react with the acidic substance produced in the electrolyte, and the interface peel force f begins to decrease and decreases significantly, that is, the set threshold is close to 100°C; and when the temperature reaches approximately 140°C, the interface peel force f is reduced to nearly zero. However, an interface peel force f' between a separator and an electrode plate in a conventional lithium-ion cell is 15 N/m when the test temperature is lower than 100°C; after the test temperature is higher than 100°C, the interface peel force f' begins to decrease but to a lesser extent; and even when the temperature reaches approximately 150°C, the interface peel force f' decreases to nearly 8 N/m. That is, compared with the conventional lithium-ion cell, when the temperature of the lithium-ion cell 1 provided in this embodiment of this application is higher than 100°C, the interface peel force between the internal separator 230 and the electrode plate will be significantly reduced to improve a current situation that the peel force between the separator and the electrode plate in the conventional lithium-ion cell is still high after temperature reaches 100°C. It should be noted that those skilled in the art can adjust a ratio between the micromatrix particles 3221 and the binder 3222, material of the micromatrix particles, and compositions of the electrolyte, so that the set threshold value is shifted toward a temperature lower than 100°C or a temperature higher than 100°C.

To sum up, the lithium-ion cell 1 provided in this embodiment of this application includes the electrode assembly 200, and the electrode assembly 200 includes the first electrode plate 210, the second electrode plate 220, and the separator 230 disposed therebetween. The separator 230 is adhered to the adjacent first electrode plate or second electrode plate 220 by bonding through the coating layer 232. The coating layer 232 of the separator 230 is configured to be capable of reacting with the acidic substance. In this way, when the temperature is higher than the preset threshold, the acid substance produced by the electrolyte will corrode the coating layer 232, so that the interface peel force between the separator 230 and the adjacent first electrode plate 210 or the second electrode plate 220 will be decreased at a condition that relative temperature is lower than the preset threshold, which is conducive to separating the separator 230 from the electrode plate and increasing a contact area between the electrode assembly 200 and an electrolyte, thereby increasing a heat dissipation area inside the lithium-ion cell and improving stability of the lithium-ion cell 1.

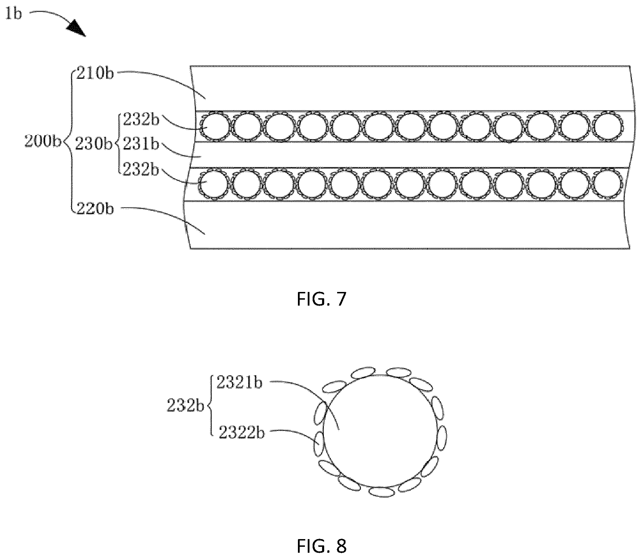

It should be understood that although the foregoing embodiment configures the coating layer to be capable of reacting with an acidic substance so that the interface peel force between the separator 230 and the electrode plate is decreased after temperature reaches a threshold, this application is not limited thereto. For example, FIG. 7 and FIG. 8 are a partial schematic diagram of an electrode assembly 200b in a lithium-ion cell 1b according to another embodiment of this application and a partial schematic diagram of a coating layer of a separator 230b, respectively. The lithium-ion cell 1b also includes a housing, an electrode assembly 200b, and an electrolyte. The electrode assembly 200b includes a first electrode plate 210b, a second electrode plate 220b, and a separator 230b. A main difference between the lithium-ion cell 1b and the lithium-ion cell 1 lies in that: a coating layer in the separator 230b is not configured to be capable of reacting with an acidic substance, but is configured to reduce separation force between the separator 230b and an electrode plate outside the separator 230b when the temperature is higher than a preset threshold. In this embodiment, the coating layer 232b is specifically configured to decrease in strength when the temperature is higher than the preset threshold, so as to decrease the separation force between the separator 230b and the electrode plate outside the separator 230b. In this way, when the temperature of the lithium-ion cell 1b is higher than the preset threshold, strength of the coating layer 232b itself is reduced, so that bonding strength between the separator 230b and the electrode plate (that is, the first electrode plate 210 or the second electrode plate 220) outside the separator 230b is reduced accordingly. The "preset threshold" mentioned in this application refers to a value of a temperature at which a separation force between the separator 230b and a connected component is reduced just when the temperature of the lithium-ion cell rises to the value. In other words, a separation force of the coating layer 232b when the temperature is higher than the preset threshold is less than its separation force when the temperature is lower than a preset threshold. The preset threshold is a temperature at which the lithium-ion cell is already in an abnormal working state, which varies with the specific specifications and usage scenarios of the cell.

Specifically, the coating layer 232b of the separator 230b includes micromatrix particles 2321b and a binder 2322b. The shape and size of the micromatrix particles 2321b are substantially the same as those of the micromatrix particles 2321 in the foregoing embodiment, and are configured to soften when the temperature is higher than the preset threshold. Optionally, the micromatrix particles 2321b include a polymer. Further optionally, the micromatrix particles 2321b are polyethylene. Softening temperature of the polyethylene is 125°C-135°C, in other words, the preset threshold is approximately 130°C. When the temperature of the lithium-ion cell 1b goes out of control and rises above the preset threshold, the lithium-ion cell 1b expands in its thickness direction, adaptively shrinks in its length direction and width direction at the same time, and generates a squeezing force in a shear direction on the first electrode plate 210b, the second electrode plate 220b, and the separator 230b that are stacked; and the squeezing force makes an interface separation force F be generated between the separator 230b and the adjacent electrode plate. In addition, softening of the micromatrix particles 2321 makes the interface peel force f between the separator 230b and the electrode plate significantly reduced, and reduction of the interface peel force f makes separation between the separator 230b and the adjacent electrode plate easier, when the interface peel force f drops to be less than the separation force F, the separator 230b will be separated from the adjacent electrode plate, and the contact area between the electrode assembly 200b and the electrolyte increases, which facilitates the electrode assembly to dissipate heat to the outside of the lithium-ion cell 1b through the electrolyte and the housing. It can be understood that, although the micromatrix particles 2321b in this embodiment include polyethylene, this application is not limited thereto. In other embodiments of this application, the micromatrix particles 2321 may also include polypropylene, ethylene propylene rubber, ethylene propylene random polymer, 1-butene-1-propylene polymer, ethylene butene propylene copolymer, or block copolymer polypropylene, or at least two of these materials. Adjustment of material composition of the micromatrix particles 2321b can shift the preset threshold towards a temperature lower than 130°C or a temperature higher than 130°C. It can be understood that, although the micromatrix particles 2321b in this embodiment are made of polymer materials with a softening point, in other embodiments of this application, the micromatrix particles 2321b may also be made of materials with a melting point. Accordingly, the micromatrix particles 2321b are configured to melt when the temperature is higher than a preset threshold.

The binder 2322b is used for bonding and fixing the micromatrix particles 2321b and a separator substrate 231b, and the separator 230b is also adhered to the adjacent first electrode plate 210b or second electrode plate 220b by bonding through the binder 2322b. A manufacturing method of the separator 230b is basically the same as that of the separator 230 described above, and is not repeated herein.

In this embodiment, a material with a lower softening or melting temperature is selected to make the micromatrix particles 2321b, and the separator 230b and the electrode plate can be separated in due time, so that a contact area between the electrode assembly and the electrolyte is enlarged, and a heat dissipation area inside the lithium-ion cell is further increased, thereby improving stability of the lithium-ion cell. Material costs of the lithium-ion cell 1b are lower than that in the previous embodiment. In addition, the softening or melting process of the micromatrix particles 2321b is a physical change, and therefore it is easier to control than the chemical change in the previous embodiment. This is because factors affecting the chemical reaction are many and complex.

Based on the same inventive concept, another embodiment of this application further provides a separator. The separator is the same as the separator described in any one of the foregoing embodiments, and is adhered to an external component of the separator by bonding through a coating layer. When the separator is applied to a lithium-ion battery, the separator is adhered to an adjacent electrode plate by bonding through a coating layer. This can improve a current situation that a heat dissipation rate of the electrode assembly is low when temperature of the current lithium-ion cell is higher than a threshold.

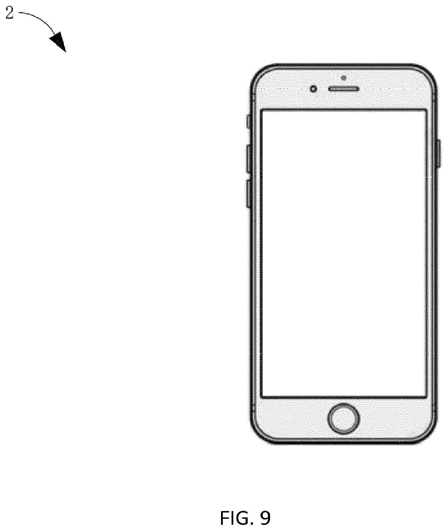

Based on the same inventive concept, another embodiment of this application further provides an electric apparatus. FIG. 9 is a schematic diagram of an electric apparatus 2 according to an embodiment of this application. The electric apparatus 2 includes the lithium-ion cell described in any one of the foregoing embodiments. In this embodiment, the electric apparatus 2 is a mobile phone. It can be understood that, in other embodiments of this application, the electric apparatus 2 may alternatively be a tablet computer, a computer, a drone, and other electric apparatuses that need to be driven by electricity.

Finally, it should be noted that the foregoing embodiments are merely intended to describe the technical solutions of this application, and are not intended to limit this application. Under the idea of this application, the foregoing embodiments or the technical features in different embodiments can also be combined, the steps can be implemented in any order, and there are many other changes in different aspects of this application as described above, which, for the sake of brevity, are not provided in detail. Although this application is described in detail with reference to the foregoing embodiments, persons of ordinary skill in the art should understand that modifications can be made to the technical solutions described in the foregoing embodiments, or equivalent substitutions can be made to some technical features therein, and these modifications or substitutions do not make the essence of the corresponding technical solutions depart from the scope of the technical solutions of the embodiments of this application.

## Claims

1. A separator, comprising:
a separator substrate, and a coating layer disposed on a surface of the separator substrate, wherein the separator is adhered to an external component through the coating layer;
the coating layer is configured to decrease a peel force between the separator and the external component when a temperature is higher than a preset threshold; or
the coating layer is configured to be capable of chemically reacting with an acidic substance to decrease the peel force.

2. The separator according to claim 1, wherein the coating layer comprises:
micromatrix particles, configured to be capable of chemically reacting with an acidic substance; and
a binder, used for bonding the micromatrix particles to the separator substrate.

3. The separator according to claim 2, wherein the micromatrix particles comprise an alkaline substance.

4. The separator according to claim 2, wherein the micromatrix particles comprise a carbonate, and the carbonate comprises at least one selected form the group consisting of lithium carbonate, sodium carbonate, sodium bicarbonate, calcium carbonate, and magnesium carbonate.

5. The separator according to claim 2, wherein the coating layer is configured to decrease in strength when the temperature is higher than the preset threshold.

6. The separator according to claim 2, wherein
the micromatrix particles, configured to soften or melt when the temperature is higher than the preset threshold; and
the binder, used for bonding the micromatrix particles to the separator substrate.

7. The separator according to claim 6, wherein the micromatrix particles comprise at least one selected form the group consisting of polyethylene, polypropylene, ethylene propylene rubber, ethylene propylene random polymer, 1-butene-1-propylene polymer, ethylene butene propylene copolymer, and block copolymer polypropylene.

8. The separator according to any one of claims 2 to 7, wherein the micromatrix particles are spherical, ellipsoidal, sheet-shaped, cuboidal, or pyramidal.

9. The separator according to any one of claims 2 to 7, wherein a maximum length of the micromatrix particles is less than 5 µm.

10. The separator according to any one of claims 2 to 7, wherein the binder is in a form of particles, and a ratio of a maximum particle diameter of the binder to a maximum diameter of the micromatrix particles is less than 0.5.

11. The separator according to any one of claims 2 to 7, wherein a surface area of the micromatrix particles coated with the binder accounts for 10%-90% of a surface area of the micromatrix particles.

12. The separator according to any one of claims 2 to 7, wherein the coating layer further comprises a dispersing agent;
a percentage of the micromatrix particles in the coating layer by mass is higher than 90%;
a percentage of the binder in the coating layer by mass is lower than 10%; and
a percentage of the dispersing agent in the coating layer by mass is lower than 2%.

13. A lithium-ion cell, comprising an electrode assembly, wherein the electrode assembly comprises:
a first electrode plate;
a second electrode plate; and
the separator according to any one of claims 1 to 11, wherein the separator is disposed between the first electrode plate and the second electrode plate, and the separator is adhered to the adjacent first electrode plate or second electrode plate by bonding through the coating layer.

14. The lithium-ion cell according to claim 13, wherein the lithium-ion cell further comprises an electrolyte; wherein
the electrolyte is configured to produce an acidic substance when a temperature is higher than a preset threshold.

15. An electric apparatus, **characterized by** comprising the lithium-ion cell according to claim 14.
